# EUROPÄISCHE PATENTSCHRIFT

(11) **EP 0 482 306 B1**
(45) Veröffentlichungstag und Bekanntmachung des Hinweises auf die Patenterteilung: **18.10.1995**
(21) Anmeldenummer: 91113531.7
(22) Anmeldetag: 13.08.1991
(51) Int. Cl.: F23B 1/14, F23B 1/08, F23B 1/24

(54) **Verfahren und Vorrichtung zum Verfeuern von Holzschnitzeln und Holzspänen unter Bildung schadstoffarmer Abgase bei gleitend regelbarer Feuerungsleistung**
Method and device for the combustion of wood chips generating fumes low in noxious substances under continuously controllable firing power
Procédé et dispositif pour la combustion des copeaux de bois en produisant des fumées pauvres en substances nocives et à puissance de combustion continûment réglable

(30) Priorität: 20.10.1990 DE 4033406
(43) Veröffentlichungstag der Anmeldung: 29.04.1992
(73) Patentinhaber: HOVAL INTERLIZ AG, FL-9490 Vaduz-Neugut (LI)
(72) Erfinder: Wehinger, Franz, A-6811 Göfis (AT)
(74) Vertreter: Zenz, Joachim Klaus, Dipl.-Ing.

(56) Entgegenhaltungen:
- EP-A- 0 157 263
- EP-A- 0 340 859
- WO-A-82/02585
- DE-A- 3 904 712

## Beschreibung

Die Erfindung betrifft ein Verfahren nach dem Oberbegriff des Patentanspruchs 1 sowie eine Vorrichtung nach dem Oberbegriff des Patentanspruchs 5.

Verfahren und Vorrichtung dieser Art sind auch aus dem EP-A-340 859 bekannt. Es wurde gefunden, daß die bekannte Verbrennung noch verbesserungsfähig ist, und zwar im Hinblick auf die Schadstofferzeugung.

Die Erfindung hat zur Aufgabe, eine Holzschnitzelfeuerung zu schaffen, die mit einem möglichst geringen Ausstoß von Kohlenmonoxid, Kohlenwasserstoff und Staubpartikeln betreibbar ist und bei der die Stickoxidemissionen durch feuerungsinterne Maßnahmen auf ein möglichst tiefes Niveau gesenkt werden. Ferner soll die Feuerung bei der Anwendung für Nutzwärmeerzeugung dem Wärmeleistungsbedarf anpaßbar sein und in der Feuerungsleistung gleitend geregelt werden können, wozu die Vorrichtung für die Durchführung des Feuerungsbetriebes eine möglichst kleine thermische Trägheit haben soll.

Diese Aufgabe löst die Erfindung verfahrensmäßig in erster Linie durch die im kennzeichnenden Teil des Anspruchs 1 aufgeführten Maßnahmen. Bei der erfindungsgemäßen Holzschnitzelfeuerung findet unter konsequenter Entkopplung von der eigentlichen Verbrennung mit Luft zunächst eine Pyrolyse des Holzmaterials statt, bei der das Holzmaterial ohne oder mit sehr geringer Zugabe von Luft als Oxidationsmittel von außen her thermisch entgast wird. Es wurde gefunden, daß hierfür eine Erhitzung der Pyrolysekammerwandung auf etwa 800 bis 850 ° geeignet ist. Etwa 85 % der Holzsubstanz sind flüchtige Bestandteile, die nach der Trennung von den festen Bestandteilen in der thermischen Entgasungsstufe als gasförmiger Brennstoff der nachfolgenden eigentlichen Verbrennungsstufe zugeleitet werden und erst dort mit ausreichender Verbrennungsluftzufuhr vollständig ausgebrannt werden. Die bei der thermischen Entgasung des Holzmaterials als Rest zurückbleibende Holzkohle wird durch eine Sauerstoffzugabe zu Kohlenmonoxid vergast. Bei sehr feuchtem Holz dient das im Holz eingeschlossene Wasser als Oxidationsmittel und kann auf eine Zugabe von Primärluft zur thermischen Holzentgasung praktisch verzichtet werden. Fehlende Holzfeuchte als Oxidationsmittel ist zur Vergasung des Holzkohlerestes durch eine stark unterstöchiometrische Primärluftzugabe zu ersetzen, die nur bei sehr trockenem Holz bis zu etwa 30 % des theoretischen Luftbedarfs für die Verbrennung von Holz ansteigen kann. Die von der eigentlichen Verbrennung abgekoppelte, zunächst nur pyrolytische Behandlung des Holzmaterials hat den Vorteil, daß keine oder nur eine sehr geringe und schwache Lufteinblasung in das Glutbett und somit ein möglichst geringer Luft-Asche-Kontakt stattfindet, wodurch die Staubemissionen der Holzschnitzelfeuerung erheblich geringer sind als bei den bisherigen konventionellen Holzschnitzelfeuerungen. Die erfindungsgemäße Anwendung einer von der eigentlichen Verbrennung prozessual und räumlich getrennten, gesonderten Pyrolyse des Holzmaterials hat vor allem den Vorteil, daß damit die Möglichkeit geschaffen wird, zwischen der Pyrolysestufe und der Verbrennungsstufe verfahrensmäßig und vorrichtungsmäßig eine Reduktionsstufe einzubauen, mit der durch eine Reduktion der bei der Pyrolyse entstehenden Stickoxide eine Stickoxidemission mit den Abgasen der Holzschnitzelfeuerung auf ein äußerst geringes Maß gesenkt werden kann. Die bei der Verbrennung von Holz entstehenden Stickoxide werden wegen der in Holzfeuerungen auftretenden, relativ niedrigen Verbrennungstemperaturen nur minimal als thermische Stickoxide in der heißen Flamme gebildet und entstammen ausschlaggebend dem im Holz gebundenen Stickstoff. Das in der Pyrolysestufe entstehenden Schwelgas, das die während der Pyrolyse entstandenen Stickoxide und Aminoverbindungen enthält, ist ein sehr stark kohlenmonoxidhaltiges Gas, dessen Kohlenmonoxidgehalt viel höher ist als bei konventionellen Holzschnitzelfeuerungen, da es nicht schon zum größten Teil verbrannt ist. Die erfindungsgemäße Holzschnitzelfeuerung macht es deshalb möglich, in der der Pyrolyse-beziehungsweise Vergasungsstufe nachgeschalteten Reduktionsstufe die Stickoxide im Schwelgas mit dem Kohlenmonoxid reagieren zu lassen, um die schädlichen Stickoxide zu unschädlichem Stickstoff zu reduzieren. Hierzu wird in der Reduktionsstufe ein Temperaturniveau eingestellt, bei dem diese reduzierende Reaktion am besten abläuft. Ein gutes Reduktionsergebnis wurde mit einer Gastemperatur von etwa 750 bis 800°C erreicht, für deren Einstellung es gegebenenfalls erforderlich sein kann, die in die Reduktionsstufe eintretenden Schwelgase zu kühlen. Erforderlichenfalls wird nicht erst in der an die Reduktionsstufe sich anschließenden Verbrennungsstufe den Schwelgasen die für einen vollständigen Ausbrand erforderliche Verbrennungsluft zugeführt, sondern wird ein Teil der Verbrennungsluft als Sekundärluft direkt in die Reduktionsstufe eingeblasen, was beim Anfahren der erfindungsgemäßen Holzschnitzelfeuerung wichtig ist und notwendig werden kann, wenn die Feuerungsanlage noch kalt ist und die Schwelgase sich beim Eintritt in die Verbrennungsstufe noch nicht von selbst entzünden. Die in die Verbrennungsstufe eintretenden Schwelgase haben aufgrund der vorangegangenen Reduktionsstufe einen sehr geringen Stickoxidgehalt, und bei Verbrennungstemperaturen, die von Holzfeuerungen in der Praxis erreichbar sind und maximal etwa 1400°C betragen, entstehen auch in der Verbrennungsstufe selber fast kaum noch thermische Stickoxide. Deshalb kann die Verbrennungsstufe der erfindungsgemäßen Holzschnitzelfeuerung mit einem möglichst kleinen überschuß an Verbrennungsluft betrieben werden, um möglichst hohe Verbrennungstemperaturen zu erreichen. Möglichst hohe Verbrennungstemperaturen sind wiederum vorteilhaft, um einen guten Ausbrand der verbrennbaren Stoffe (Kohlenmonoxid und Kohlenwasserstoff im Schwelgas) und damit sehr schadstoffarme Verbrennungsabgase sowie auch einen guten feuerungstechnischen Wirkungsgrad zu erzielen. Eine Staubemission mit den Verbrennungsabgasen der Verbrennungsstufe tritt ebenfalls nicht ein, da aufgrund der anfänglichen, vom Verbrennungsvorgang abgekoppelten pyrolytischen Behandlung des Holzmaterials nur gasförmige Brennstoffe der eigentlichen Verbrennungsstufe zugeführt werden, in der kein Verbrennungsluft-Asche-Kontakt vorkommt. In der Verbrennungsstufe wird den eintretenden Schwelgasen vorteilhafterweise die Verbrennungsluft im Gegenstrom zu den Schwelgasen beigemischt, wodurch eine gute Durchmischung von Schwelgasen und Verbrennungsluft bewirkt wird. Vor allem wird der in der Verbrennungsstufe entstehenden Flamme mit Leitschaufeln oder dergleichen eine Drallströmung aufgezwungen. Mit dieser Erzeugung einer als rotierender brennender Wirbel sich vorwärts bewegenden Flamme wird auch noch bei kleinen Volumenströmen in der Verbrennungsstufe eine hohe Durchmischungsqualität erreicht, so daß die erfindungsgemäße Holzschnitzelfeuerung auch mit einer kleinen und von der Nennleistung gleitend herunterregelbaren Leistung bei einem niedrigen Luftüberschuß und mit einem guten Ausbrand in der Verbrennungsstufe betrieben werden kann. Dies ist von besonderer Wichtigkeit, weil gerade beim Anfahren und beim Abstellen der Feuerung im Intervallbetrieb Kohlenmonoxidemissionen auftreten, die die Emissionen während des Betriebes übertreffen können. Die Verbrennungsluftmenge für die Verbrennungsstufe wird so reguliert und abgemessen, daß die Verbrennungsstufe am Punkt der niedrigsten Emissionen und des höchsten Wirkungsgrades arbeitet. Diejenige Verbrennungsluftmenge, bei der die Kohlenmonoxidkonzentration in den Verbrennungsgasen am geringsten ist und deren überschreiten wie auch Unterschreiten im überstöchiometrischen Bereich die Kohlenmonoxidkonzentration ansteigen läßt, kann zum Beispiel durch einen Sensor im Abgasstrom erfolgen, der bei Anwesenheit von unverbrannten Kohlenwasserstoffen reagiert. In der Feuerungscharakteristik einer Holzschnitzelfeuerung wird der Punkt der niedrigsten Emissionen und des höchsten Wirkungsgrades bei einer Luftüberschußzahl in der Nähe von etwa 1,2 liegen.

Eine für die Durchführung der erfindungsgemäßen Verfahrensweise besonders geeignete Vorrichtung beziehungsweise Verbrennungsanlage ist erfindungsgemäß durch die in den Vorrichtungsansprüchen enthaltenen Merkmale gekennzeichnet und wird nachfolgend anhand des in der Zeichnung dargestellten Ausführungsbeispiels näher beschrieben.

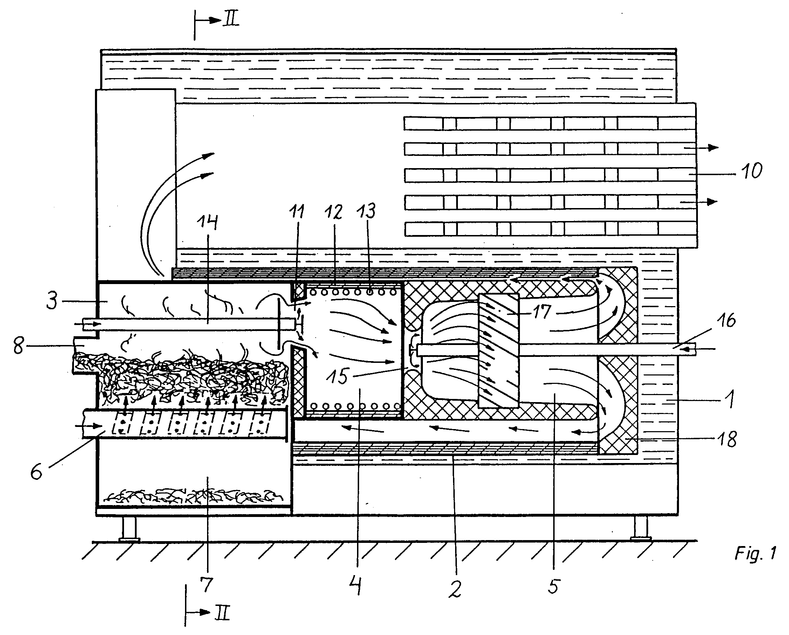

In der Zeichnung zeigen
Figur 1 die Vorrichtung in einem senkrechten Längsschnitt,

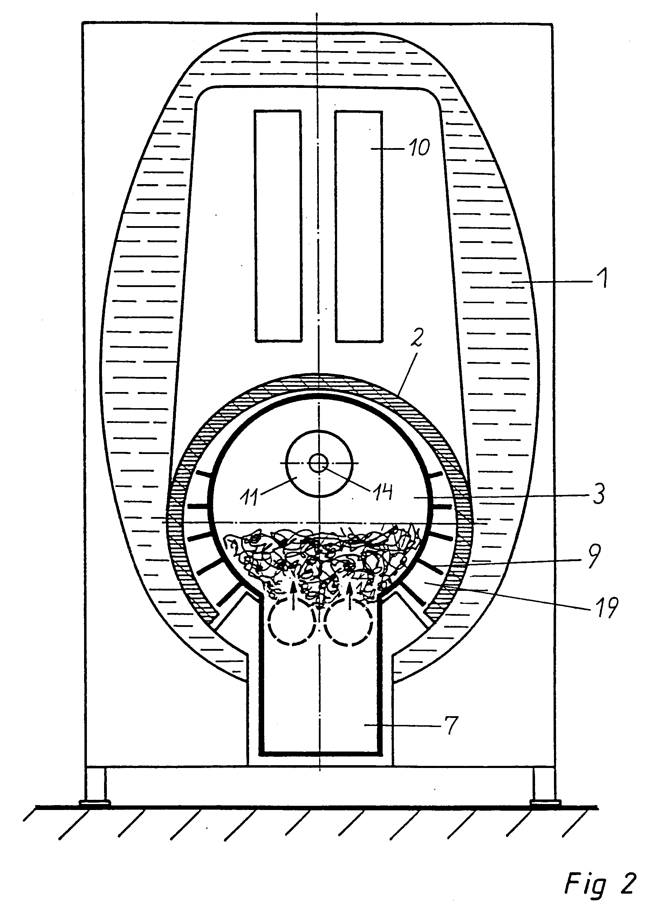

Figur 2 einen Querschnitt nach der Linie II-II in Figur 1,

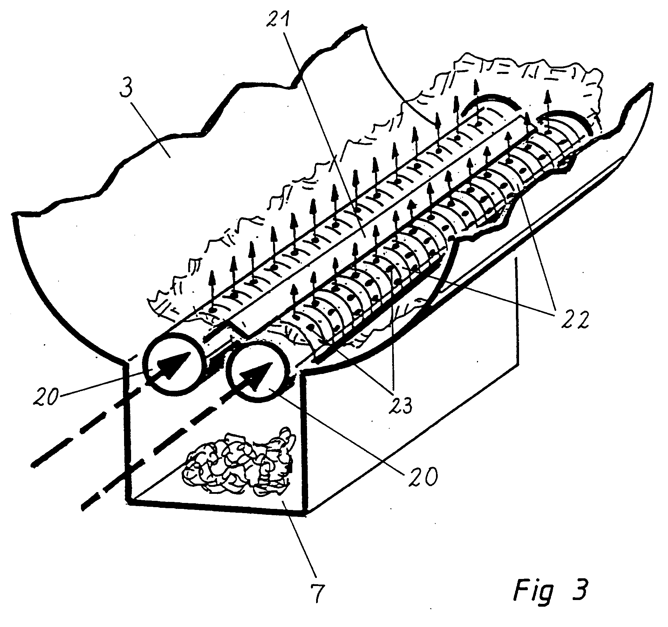

Figur 3 die in Figur 1 am linken Ende der Vorrichtung liegende Vorrichtungskammer in einer teilweisen, perspektivischen Darstellung,
Figur 4 eine Einzelheit aus der Figur 3.

Die Vorrichtung enthält in einem waagerechten, mit hochtemperaturfestem keramischen Material ausgekleideten und von einem Wassermantel 1 umgebenen Zylinder 2 drei zylindrisch hintereinander angeordnete Kammern 3, 4 und 5. Die Kammer 3 am vorderen Ende der Vorrichtung ist eine luftdicht geschlossene Pyrolysekammer, unter deren Rost 6 sich ein luftdicht angeschlossener Aschekasten 7 befindet und an deren Einfüllöffnung luftdicht eine nicht näher dargestellte Beschickungseinrichtung angeschlossen ist. Die für die Pyrolysekammer 3 benötigte Primärluft tritt steuerbar ausschließlich durch den Rost 6 ein. Die Wandung der Pyrolysekammer 3 besteht aus hochtemperaturbeständigem Stahl und ist von außen mittels der die Brennkammer 5 verlassenden Verbrennungsabgase beheizbar, wozu die Wandung der Pyrolysekammer außenseitig mit Wärmeaustauschrippen 9 versehen ist. Nach der Wärmeabgabe an die Pyrolysekammer 3 strömen die Verbrennungsabgase zur Gewinnung von Nutzwärme noch durch vom Wassermantel 1 gekühlte Heizflächen 10. Die in der Pyrolysekammer 3 durch thermische Entgasung des Holzmaterials und durch Vergasung des Holzkohlenrestes mittels der stark unterstöchiometrischen Primärluftzufuhr entstehenden Schwelgase treten durch eine Überströmöffnung 11 in die Kammer 4 über, in der eine an die Pyrolysestufe sich anschließende Reduktionsstufe stattfindet. Die Wandung der Reduktionskammer 4 besitzt eine Wärmeisolierung 12 und ist innenseitig mittels wasserführender Rohre 13 kühlbar. In der Reduktionskammer 4 wird, erforderlichenfalls durch eine Kühlung mittels der Wasserrohre 13, ein Temperaturniveau der eintretenden Schwelgase eingestellt, bei dem der hohe Gehalt der Schwelgase an Kohlenmonoxid eine Reduktion der Stickoxide bewirkt, die in der Pyrolysekammer 3 entstehen und aus dem im Holzmaterial enthaltenen Stickstoff stammen. Erforderlichenfalls, insbesondere beispielsweise beim Anfahren der noch kalten Vorrichtung, ist Sekundärluft in die Reduktionskammer 4 einzuführen. Hierzu führt zur Vorwärmung der Sekundärluft ein Rohr 14 durch die Pyrolysekammer 3. Vorteilhafterweise leitet das Rohr 14 die Sekundärluft an der Schwelgasüberströmöffnung 11 ein, um die Sekundärluft intensiv mit dem Schwelgasstrom zu durchmischen. Von der Reduktionskammer 4 treten die Schwelgase durch eine Verbindungsöffnung 15 in die Brennkammer 5 ein, deren Wandung aus hochtemperaturbeständigem keramischen Material besteht. In der Brennkammer 5 findet die Selbstentzündung der eintretenden Schwelgase und deren vollständiger Ausbrand mit zugeführter Verbrennungsluft statt. Die Zufuhr der Verbrennungsluft erfolgt durch ein Rohr 16, das zur Vorwärmung der Verbrennungs- beziehungsweise Tertiärluft durch die Brennkammer 5 hindurchführt und an der Verbindungsöffnung 15 den Schwelgasen im Gegenstrom die Verbrennungsluft zuführt, wodurch eine intensive Durchmischung der Schwelgase mit Verbrennungsluft eintritt. In einem vorbestimmten axialen Abstand von der Verbindungsöffnung 15 enthält die Brennkammer 5 eine vorzugsweise ebenfalls aus hochtemperaturbeständigem keramischen Material bestehende Leitschaufeleinrichtung 17, die der am Anfang der Brennkammer 5 entstehenden Flamme eine kräftige Drallströmung aufzwingt, die eine weitere hochwirksame Durchmischung der Schwelgase und Verbrennungsluft erzeugt, und zwar auch noch bei kleinen Volumenströmen bei heruntergeregelter kleiner Feuerungsleistung der Vorrichtung. Am Ende der Brennkammer 5 werden die Verbrennungsabgase durch eine keramische Feuerraumrückwand 18 in einen von dem ausgekleideten Zylinder 2 umgebenen Ringkanal 19 geleitet, bei dessen Durchströmen die Verbrennungsabgase zunächst die keramische Wandung der Brennkammer 5 von außen erhitzen und hierdurch zu der angestrebten möglichst hohen Verbrennungstemperatur in der Brennkammer 5 beitragen und sodann die Wandung der Pyrolysekammer 3 von außen her erhitzen.

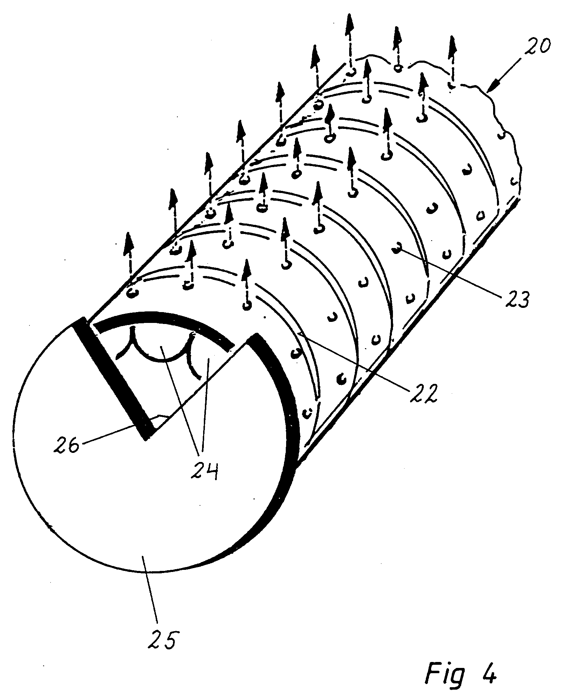

Die bei der Holzschnitzelfeuerung entstehende Asche fällt in der Pyrolysekammer 3 an. Dank einer besonders vorteilhaften erfindungsgemäßen Entaschung des auf dem Rost 6 zur thermischen Entgasung liegenden glühenden Holzmaterialbettes und Zufuhr an benötigter stark unterstöchiometrischer Primärluftmenge verbleibt praktisch die gesamte Aschemenge in der Pyrolysekammer und wird nur ein vernachlässigbar kleiner Betrag an Aschestaub von den die Pyrolysekammer verlassenden Schwelgasen mitgetragen. Der erfindungsgemäß ausgebildete Rost 6 der Pyrolysekammer 3 besteht aus zwei in Längsrichtung der Kammer sich erstreckenden Rohren 20, die den Boden der Pyrolysekammer 3 bilden, auf den das eingefüllte Holzmaterial fällt, und unter denen sich die Aschekammer 7 befindet. Die Rohre 20 sind drehbar gelagert und werden durch einen Motor so angetrieben, daß sie sich mit ihrem oberen Umfang gegenläufig zu dem Spalt zwischen den beiden Rohren hin bewegen. Der Abstand zwischen den Rohren 20 und den benachbarten Wandungen von Pyrolysekammer 3 beziehungsweise Aschekammer 7 ist so eng, daß kein eingefülltes Holzmaterial hindurchfallen kann. Der Spalt zwischen den beiden Rohren 20 ist über den Rohren durch eine dachförmig ausgebildete Abstreifvorrichtung 21 abgedeckt, so daß auch durch den Spalt zwischen den beiden Rohren kein Holzmaterial in die Aschekammer hindurchfallen kann. Die beiden Rohre 20 sind auf ihrem Außenumfang mit förderschneckenartig oder gewindeartig ausgebildeten Vertiefungen 22 versehen. Ferner besitzen beide Rohre 20 auf ihrem Umfang Luftaustrittslöcher 23, die vorzugsweise zwischen den gewindeartig verlaufenden Vertiefungen 22 angeordnet sind. Die beiden Rohre 20 bewirken mit ihrer Drehung und mit ihren gewindeartigen Vertiefungen einen Transport der an der Einfüllöffnung 8 der Pyrolysekammer 3 eingefüllten Holzschnitzel zu dem der Einfüllöffnung gegenüberliegenden Kammerende hin, um das Holzmaterial in der Pyrolysekammer für den Pyrolysebetrieb durch Strahlungsaustausch und konvektiven Wärmeübergang mit der Kammerwand zu verteilen. Weiterhin bewirken die Rohre 20, daß die bei der stark unterstöchiometrischen Primärluftzufuhr zur Vergasung der Holzkohle entstehende Asche von den von der Abstreifvorrichtung 21 festgehaltenen Holzschnitzeln getrennt wird und in den gewindeartigen Vertiefungen 22 durch den Spalt zwischen den beiden Rohren 20 hindurch in die Aschekammer 7 transportiert wird. Als dritte Funktion übernehmen die Rohre 20 die Aufgabe der Primärluftzufuhr. Die Anzahl der Luftaustrittslöcher 23 nimmt vorzugsweise zum hinteren Ende der Rohre 20 hin ab, um mit Rücksicht auf den in den Rohren zum hinteren Ende hin zunehmenden Staudruck eine gleichmäßige Verteilung des Primärluftaustrittes über die Länge der Rohre 20 zu erhalten. Damit die in das vordere Ende der Rohre 20 eingeleitete Luft nicht an der Rohrunterseite in die Aschekammer, sondern nur über einen vorbestimmten Bereich der Oberseite austritt, sind die Rohre 20, wie in Figur 4 ersichtlich, im Innern durch Einbaubleche oder dergleichen in mehrere in Rohrlängsrichtung verlaufende Rohrkammern 24 unterteilt. Jede Kammer 24 versorgt einen in Rohrlängsrichtung verlaufenden schmalen Streifen von Luftaustrittslöchern 23 mit Luft. Am vorderen Ende beider Rohre 20 ist eine feststehende Abdeckplatte 25 angeordnet, die einen segmentförmigen Ausschnitt 26 besitzt, über den jeweils nur die am oberen Umfangsbereich der Rohre liegenden Rohrkammern 24 mit der Primärluftzufuhr in Verbindung stehen. Hierbei ist der segmentförmige Ausschnitt 26 vorteilhafterweise so bemessen, daß die Primärluft nur über etwa die halbe Breite derjenigen Rohroberfläche austritt, die mit dem Glutbett des pyrolytisch zu behandelnden Holzmaterials in Kontakt ist. Die nicht von Primärluft durchströmte Kontaktfläche zwischen dem Glutbett und den Rohren, die seitlich der Luftaustrittsfläche liegt, dient der Akkumulation der von den drehenden Rohren in die Aschekammer zu transportierenden Asche.

Durch die erzwungene Drallströmung der am Anfang der Brennkammer 5 entstehenden Flamme mittels der Leitschaufeleinrichtung 17 sowie durch die vorteilhafterweise entgegen der Strömungsrichtung der Schwelgase erfolgende Zuführung von Verbrennungsluft am Anfang der Brennkammer 5 beziehungsweise an der Verbindungsöffnung 15 werden Verbrennungsluft und Schwelgase so intensiv durchmischt, daß die Verbrennung in der Brennkammer mit geringem Luftüberschuß und trotzdem guten Ausbrand der Schwelgase vorgenommen werden kann und außerdem die Verbrennungsleistung der Vorrichtung etwa zwischen 20 bis 100 % der Nennleistung gleitend geregelt werden kann, um die jeweilige Verbrennungsleistung dem Bedarf an erzeugter Wärmeenergie anzupassen. Sobald die Temperatur des Wassermantels 1 einen vorgegebenen Wert überschreitet, wird die Feuerungsleistung reduziert, indem die Luftvolumenströme (Primärluft in die Pyrolysekammer 3, gegebenenfalls Sekundärluft in die Reduktionskammer 4, Tertiärluft beziehungsweise Verbrennungsluft in die Brennkammer 5) mittels an sich bekannter Ventile verändert werden. Weiterhin kann auch die Materialzufuhr in die Pyrolysekammer 3, die zum Beispiel aus einem luftdicht verschließbaren Tagesbehälter mittels einer Förderschnecke durch die Einfüllöffnung 8 erfolgen kann, über einen Füllstandmelder reguliert werden. Damit die Vorrichtung gut leistungsregulierbar ist, besteht die Wandung der Pyrolysekammer 3 aus einem hochtemperaturfesten Stahlblech, welches eine geringe thermische Trägheit besitzt, so daß bei einer Veränderung der Luftvolumenströme sich auch rasch die äußere Beheizung der Pyrolysekammer verändert und die thermische Entgasung nicht durch Wärmespeicherung in der Pyrolysekammer unerwünscht weiterläuft. Für die Brennkammer 5 hingegen wird mit Hilfe der aus feuerfester Keramik bestehenden Kammerwandung eine gewisse thermische Trägheit gewünscht, um kurzfristige Schwankungen der Verbrennungstemperatur nach unten mit gespeicherter Wärme zu überbrücken, damit die Temperatur der Brennkammerwandung nicht unerwünscht absinkt und infolgedessen auch nicht die Emissionen an unverbrannten Stoffen kurzfristig ansteigen. Mittels der Luftregelventile kann die Vorrichtung nicht nur in ihrer Leistung, sondern auch in ihrer Verbrennungsqualität reguliert werden, indem die in die Brennkammer 5 einzuleitende Verbrennungsluftmenge zum Beispiel mit Hilfe eines Sensors für unverbrannte Kohlenwasserstoffe im Abgas so geregelt wird, daß der Verbrennungsprozeß in der Brennkammer 5 mit möglichst hohem Wirkungsgrad und mit möglichst niedriger Emission an Kohlenmonoxid und Kohlenwasserstoffen abläuft.

## Patentansprüche

1. Verfahren zum Verfeuern von Holzschnitzeln und Holzspänen unter Bildung schadstoffarmer Abgase bei gleitend regelbarer Feuerungsleistung, wobei das Verfahren folgende Schritte umfaßt:
das Holzmaterial wird in einer Pyrolysekammer (3) durch äußere Beheizung und mit stark unterstöchiometrischer Primärluftbeimengung entgast,
die Schwelgase werden in eine Brennkammer (5) eingeleitet, an deren Eintritt durch Einleiten von Verbrennungsluft der Ausbrand der Schwelgase eingeleitet wird und in der der entstehenden Flamme mittels Leiteinrichtungen (17) in der Brennkammer (5) eine Drallströmung aufgezwungen wird,
und die die Brennkammer (5) verlassenden Abgase werden mit der Außenseite der Brennkammer und der Außenseite der Pyrolysekammer (3) zur Wärmeabgabe an die Kammern in Berührung gebracht, bevor die Abgase zur Erzeugung von Nutzwärme durch wassergekühlte Heizflächen (10) geleitet werden,
**dadurch gekennzeichnet,**
daß die die Pyrolysekammer (3) verlassenden Schwelgase in eine Reduktionskammer (4) eingeleitet werden, in der das Temperaturniveau der Schwelgase, erforderlichenfalls durch eine Kühlung der in die Reduktionskammer (4) eintretenden Schwelgase, so eingestellt wird, daß mittes des in den Schwelgasen enthaltenen hohen Kohlenmonoxidgehalts eine Reduktion der in den Schwelgasen enthaltenen Stickoxide auf einen möglichst niedrigen Restgehalt an Stickoxiden in den Schwelgasen bewirkt wird.

2. Verfahren nach Anspruch 1, dadurch gekennzeichnet, daß die Pyrolysekammer (3) auf eine Wandtemperatur von etwa 800 bis 850 °C erhitzt wird und dem thermisch zu entgasenden Holzmaterial eine von der Holzfeuchte abhängige Primärluftmenge zugeführt wird, die bei sehr trockenem Holzmaterial bis zu etwa 30 % des theoretischen Luftbedarfs für die Verbrennung von Holz beträgt und mit zunehmender Holzfeuchte abnimmt.

3. Verfahren nach Anspruch 1, dadurch gekennzeichnet, daß in der Reduktionskammer (4) eine Gastemperatur von etwa 750 bis 800 °C eingestellt wird und in der Anfahrphase des Verfahrens Sekundärluft in die Reduktionskammer (4) eingeleitet wird, bis durch eine teilweise Schwelgasverbrennung mit Sekundärluft in der Reduktionskammer (4) die Reduktionstemperatur erreicht wird.

4. Verfahren nach Anspruch 1, dadurch gekennzeichnet, daß die in die Brennkammer (5) für die vollständige Schwelgasverbrennung einzuleitende Verbrennungsluft den in die Brennkammer (5) eintretenden Schwelgasen im Gegenstrom beigemischt wird.

5. Vorrichtung zum Verfeuern von Holzschnitzeln und Holzspänen unter Bildung schadstoffarmer Abgase bei gleitend regelbarer Feuerungsleistung, wobei die Vorrichtung folgende Merkmale umfaßt:
eine Pyrolysekammer (3) mit einem luftdicht angeschlossenen Ascheraum (7), mit einer an die Einfüllöffnung (8) der Kammer luftdicht angeschlossenen Beschickungseinrichtung, mit einem Rost (6), durch den eine steuerbare Primärluftmenge in die Pyrolysekammer (3) einführbar ist, und mit einer durch äußere Wärmebeaufschlagung beheizbaren Kammerwandung,
eine über eine Verbindungsöffnung (15) der Pyrolysekammer (3) nachgeschaltete Brennkammer (5), in die an der Verbindungsöffnung (15) eine Luftzufuhr (16) zum Einblasen von Verbrennungsluft in die Brennkammer (5), vorzugsweise im Gegenstrom zu den eintretenden Schwelgasen, einmündet und die Leitschaufeln (17) zur Erzeugung einer Drallströmung der in der Brennkammer (5) entstehenden Schwelgasverbrennungsflamme enthält,
und einen Rauchgaskanal (19), der vom Abgasaustritt der Brennkammer (5) zur Pyrolysekammer (3) führt und mit der Außenseite der Pyrolysekammerwandung in wärmeaustauschender Verbindung steht und danach durch wassergekühlte Heizflächen (10) zur Nutzwärmegewinnung führt,
**gekennzeichnet,**
durch eine über eine Schwelgasüberströmöffnung (11) an die Pyrolysekammer (3) angeschlossene Reduktionskammer (4), die eine wärmeisolierte Kammerwandung besitzt und mittels wasserführender Einbauten (13) kühlbar ist und in die vorzugsweise an der Schwelgasüberströmöffnung (11) Sekundärluft einführbar ist.

6. Vorrichtung nach Anspruch 5, dadurch gekennzeichnet, daß die Pyrolysekammerwandung aus hochtemperaturbeständigem Stahlblech besteht und außenseitig in den Rauchgaskanal (19) hineinragende Wärmeaustauschrippen (9) besitzt.

7. Vorrichtung nach Anspruch 5, dadurch gekennzeichnet, daß die Wandung der Brennkammer (5) aus hochtemperaturbeständigem keramischen Material besteht und außenseitig durch die im Rauchgaskanal abströmenden Verbrennungsabgase beheizbar ist.

8. Vorrichtung nach Anspruch 5, dadurch gekennzeichnet, daß der Rost (6) der Pyrolysekammer (3) aus zwei parallelen und drehbaren Rohren (20) besteht, die sich mit ihrem oberen Umfang gegenläufig zu dem Spalt zwischen den Rohren hin bewegen, wobei der Spalt durch einen mit den Rohren (20) zusammenwirkenden Abstreifer (21) überdeckt ist, daß ferner die Rohre einen förderschneckenartig ausgebildeten Umfang besitzen, der bei der Rohrdrehung eine Weiterbewegung des durch die Einfüllöffnung (8) der Pyrolysekammer (3) eingeführten Holzmaterials bewirkt, und daß die Rohre (20) im Innern in mehrere in Rohrlängsrichtung verlaufende Rohrkammern (24) unterteilt sind, denen jeweils ein mit Luftaustrittslöchern (23) versehener Längsstreifen der Rohrwandung zugeordnet ist und von denen während der Rohrdrehung jeweils nur diejenigen Rohrkammern (24) mit einer Primärluftzufuhr in Verbindung stehen, deren zugeordneter Rohrwandungslängsstreifen einen Teil der Kontaktfläche zwischen dem Rohrrost (6) und dem Glutbett des Holzmaterials bildet.

## Claims

1. Method of burning wood chips and wood shavings to form exhaust gases low in pollutants with a continuously controllable heat output, the method including the following steps:
the wood material is carbonised in a pyrolysis chamber (3) by external heating and the addition of substantially sub-stoichiometric primary air,
the carbonisation gases are fed into a combustion chamber (5), at whose inlet the final combustion of the carbonisation gases is initiated by the introduction of combustion air and in which a rotational flow of the resulting flame is induced by means of guide devices (17) in the combustion chamber (5),
and the exhaust gases leaving the combustion chamber (5) are brought into contact with the external surface of the combustion chamber and the external surface of the pyrolysis chamber (3) to transfer heat to the chambers before the exhaust gases are passed through water cooled heated surfaces (10) to produce useful heat,
characterised in that the carbonisation gases leaving the pyrolysis chamber (3) are passed into a reducing chamber (4) in which the temperature level of the carbonisation gases is so adjusted, if necessary by cooling the carbonisation gases entering into the reducing chamber (4), that a reduction of the nitrogen oxides contained in the carbonisation gases is brought about by means of the high carbon monoxide content of the carbonisation gases to as low as possible a residual content of nitrogen oxides in the carbonisation gases.

2. Method as claimed in claim 1, characterised in that the pyrolysis chamber (3) is heated to a wall temperature of about 800-850°C and an amount of primary air dependent on the moisture content of the wood is supplied to the wood material which is to be thermally carbonised, which air is up to about 30% of the theoretical air requirement for the combustion of wood in the case of very dry wood material and decreases with increasing moisture content of the wood.

3. Method as claimed in claim 1, characterised in that a gas temperature of about 750-800°C is set in the reducing chamber (4) and in the start up phase of the method secondary air is fed into the reducing chamber (4) until the reduction temperature is reached due to partial carbonisation gas combustion with secondary air in the reducing chamber (4).

4. Method as claimed in claim 1, characterised in that the combustion air to be fed into the combustion chamber (5) for the complete carbonisation gas combustion is added to the carbonisation gases entering into the combustion chamber (5) in countercurrent.

5. Apparatus for burning wood chips and wood shavings to form exhaust gases low in pollutants with continuously controllable heat output, the apparatus including the following features:
a pyrolysis chamber (3) with an ash space (7) connected thereto in an air-tight manner, with a charging device connected to the filling opening (8) of the chamber in an air-tight manner, with a grating (6) through which a controllable volume of primary air may be introduced into the pyrolysis chamber (3), and with a chamber wall which is heatable by the action of external heat,
a combustion chamber (5), which is connected downstream of the pyrolysis chamber (3) by means of a connecting opening (15) and with which an air supply (16) communicates at the connecting opening (15) for blowing combustion air into the combustion chamber (5), preferably in countercurrent to the inflowing carbonisation gases, and which contains guide vanes (17) for producing a rotating flow of the carbonisation gas combustion flame produced in the combustion chamber (5),
and a flue gas passage (19), which leads from the exhaust gas outlet of the combustion chamber (5) to the pyrolysis chamber (3) and is in heat exchange relationship with the external surface of the pyrolysis chamber wall and thereafter leads through water cooled heating surfaces (10) for recovering useful heat,
characterised by a reducing chamber (4), which is connected to the pyrolysis chamber by means of a carbonisation gas overflow opening (11) and which has a heat insulated chamber wall and may be cooled by means of components which conduct water and into which secondary air may be introduced, preferably at the carbonisation gas overflow opening (11).

6. Apparatus as claimed in claim 5, characterised in that the pyrolysis chamber wall comprises high temperature-resistant steel plate and on its exterior has heat exchange ribs (9) projecting into the flue gas passage (19).

7. Apparatus as claimed in claim 5, characterised in that the wall of the combustion chamber (5) comprises high temperature-resistant ceramic material and is heatable externally by the combustion exhaust gases flowing away in the flue gas passage.

8. Apparatus as claimed in claim 5, characterised in that the grating (6) of the pyrolysis chamber (3) comprises two parallel and rotatable tubes (20), whose upper peripheries move in opposite senses towards the gap between the tubes, whereby the gap is covered by a wiper (21) cooperating with the tubes (20), that the tubes further have a periphery constructed in the manner of a screw conveyor which, on rotation of the tubes, effects a further movement of the wood material introduced through the filling opening (8) of the pyrolysis chamber (3) and that the tubes (20) are divided in their interior into a plurality of tube chambers (24), which extend in the longitudinal direction of the tubes and associated with each of which is a longitudinal strip of the tube wall provided with air outlet holes (23) and of which, during the rotation of the tubes, only those tube chambers (24), whose associated tube wall longitudinal strip constitutes a portion of the contact surface between the tube grating (6) and the incandescent bed of the wood material, are connected to a primary air supply.

## Revendications

1. Procédé d'incinération de déchets-rognures de bois et de copeaux de bois avec formation de gaz d'échappement à faible teneur en substances nocives, avec une allure d'incinération réglable de façon glissante, le procédé comprenant les étapes ci-après :
le matériau ligneux est dégazé dans une chambre de pyrolyse (3), par chauffage extérieur et avec ajout d'air primaire, dans des proportions fortement sous-stoechiométriques,
les gaz de distillation sont introduits dans une chambre de combustion (5) à l'entrée de laquelle, par introduction d'air de combustion, la combustion des gaz de distillation est induite et dans laquelle la flamme produite est contrainte, au moyen de dispositifs de guidage (17), à effectuer un écoulement rotatif dans la chambre de combustion (5),
et les gaz d'échappement quittant la chambre de combustion (5) sont mis en contact avec la face extérieure de la chambre de combustion et la face extérieure de la chambre de pyrolyse (3) en vue de fournir de la chaleur aux chambres, avant que les gaz d'échappement soient guidés à travers des surfaces de chauffe (10) refroidies par de l'eau en vue de produire de la chaleur utile,
caractérisé en ce que,
les gaz de distillation quittant la chambre de pyrolyse (3) sont introduits dans une chambre de réduction (4) dans laquelle le niveau de température des gaz de distillation est établi, en cas de nécessité, par un refroidissement des gaz de distillation entrant dans la chambre de réduction (4) de façon que, au moyen de la teneur en oxyde de carbone élevée contenue dans les gaz de distillation, soit provoquée une réduction de l'oxyde d'azote contenu dans les gaz de distillation pour atteindre une teneur résiduelle aussi faible que possible en oxyde d'azote dans les gaz de distillation.

2. Procédé selon la revendication 1, caractérisé en ce que la chambre de pyrolyse (3) est chauffée à une température de paroi d'à peu près 800 à 850°C et une quantité d'air primaire, fonction de l'humidité du bois, est amenée au matériau ligneux à dégazer par voie thermique, cette quantité d'air primaire étant, pour du bois très sec, d'une valeur d'à peu près 30 % de la consommation d'air théorique pour la combustion de bois et allant en diminuant lorsque l'humidité du bois augmente.

3. Procédé selon la revendication 1, caractérisé en ce que dans la chambre de réduction (4) est établie une température de gaz d'à peu près 750 à 800°C et, dans la phase de démarrage du procédé, de l'air secondaire est introduit dans la chambre de réduction (4), jusqu'à ce que la température de réduction soit atteinte par combustion partielle des gaz de distillation avec l'air secondaire dans la chambre de réduction (4).

4. Procédé selon la revendication 1, caractérisé en ce que l'air de combustion à introduire dans la chambre de combustion (5) pour obtenir la combustion totale des gaz de distillation est ajouté par mélange aux gaz de distillation entrant dans la chambre de combustion (5), avec écoulement à contre courant.

5. Dispositif d'incinération de déchets-rognures de bois et de copeaux de bois avec formation de gaz d'échappement à faible teneur en substances nocives avec une allure d'incinération réglable de façon glissante, le dispositif comprenant les caractéristiques ci-après :
une chambre de pyrolyse (3), avec un cendrier (7) raccordé de façon étanche à l'air, avec un dispositif de chargement raccordé de façon étanche à l'air à l'ouverture de remplissage (8) de la chambre, avec une grille (6), à travers laquelle une quantité d'air primaire pouvant être commandée peut être introduite dans la chambre de pyrolyse (3), et avec une paroi de chambre pouvant être chauffée par une sollicitation thermique extérieure,
une chambre de combustion (5) mise en circuit en aval de la chambre de pyrolyse (3), par l'intermédiaire d'une ouverture de liaison (15) et dans laquelle, à l'ouverture de liaison (15) débouche une amenée d'air (16) destinée à insuffler de l'air de combustion dans la chambre de combustion (5), de préférence à contre-courant des gaz de distillation entrants, et contenant des aubes directrices (17) destinées à produire un écoulement rotatif de la flamme de combustion des gaz de distillation produite dans la chambre de combustion (5),
et un canal de gaz de fumée (19) qui mène de la sortie des gaz d'échappement de la chambre de combustion (5) à la chambre de pyrolyse (3) et qui est relié, avec échange de chaleur, à la face extérieure de la paroi de chambre de pyrolyse, ce qui est suivi par des surfaces de chauffe (10) refroidies à l'eau, pour la récupération de chaleur utile,
caractérisé
par une chambre de réduction (4) raccordée à la chambre de pyrolyse (3) par l'intermédiaire d'une ouverture de transfert de gaz de distillation (11), la chambre de réduction (4) ayant une paroi de chambre isolée thermiquement et pouvant être refroidie au moyen de garnissages (13) permettant un guidage d'eau, et dans laquelle de l'air secondaire peut être introduite, de préférence à l'ouverture de transfert des gaz de distillation (11).

6. Dispositif selon la revendication 5, caractérisé en ce que la paroi de chambre de pyrolyse est constituée de tôle d'acier résistant à haute température et a en face extérieure des nervures d'échange de chaleur (9) pénétrant dans le canal de gaz de fumée (19).

7. Dispositif selon la revendication 5, caractérisé en ce que la paroi de la chambre de combustion (5) est constituée de matériau céramique résistant à haute température et peut être chauffée en face extérieure au moyen de gaz d'échappement de combustion dont l'écoulement sort dans le canal de gaz de fumée.

8. Dispositif selon la revendication 5, caractérisé en ce que la grille (6) de la chambre de pyrolyse (3) est constituée de deux tubes (20), parallèles et susceptibles de tourner, qui se déplacent avec leur périphérie supérieure en sens inverses par rapport à l'interstice constitué entre les tubes, interstices étant recouvert au moyen d'un racleur (21) coopérant avec les tubes (20) et, en outre, les tubes comportant une périphérie, réalisée à la façon d'une vis de transport et qui provoque, lors de la rotation des tubes, une continuation du déplacement du matériau ligneux introduit par l'ouverture de remplissage (8) de la chambre de pyrolyse (3), et en ce que les tubes (20) sont subdivisés à l'intérieur en plusieurs chambres tubulaires (24) s'étendant dans la direction longitudinale de ces tubes, chambres tubulaires à chacune desquelles est associée une bande longitudinale, pourvue de trous de sortie d'air (23), de la paroi tubulaire et dont, pendant la rotation du tube, chaque fois seules sont reliées à l'amenée d'air primaire les chambres de tubes (24) dont les bandes longitudinales de parois de tubes associées constituent une partie de la surface de contact entre la grille de tube (6) et le lit incandescent du matériau ligneux.
